# DEMANDE DE BREVET EUROPEEN

(11) **EP 3 848 755 A1**
(43) Date de publication de la demande: **14.07.2021**
(21) Numéro de dépôt: 21150159.8
(22) Date de dépôt: 05.01.2021
(51) Int. Cl.: G03B 21/604, G03B 21/62, G02B 27/01

(54) **SYSTEME DE PROJECTION COMPRENANT UN VITRAGE POUR ECRAN TRANSPARENT**

(30) Priorité: 10.01.2020 FR 2000243
(71) Demandeur: Saint-Gobain Glass France, 92400 Courbevoie (FR)
(72) Inventeur: TONDU, Thomas, 45110 Saint-Martin d'Abbat (FR)
(74) Mandataire: Cabinet Chaillot

(57) **Abrégé**

L'invention concerne un système de projection comprenant un vitrage (5) pour écran transparent (2), caractérisé par le fait que le vitrage (5) comprend un plan à réflexion diffuse (6) et un premier filtre polarisant (7) situé d'un côté du plan à réflexion diffuse (6), le premier filtre polarisant (7) ayant une première direction de polarisation de telle sorte que le premier filtre polarisant (7) transmet la lumière polarisée selon cette première direction de polarisation.

## Description

La présente invention concerne le domaine du vitrage, et porte plus particulièrement sur un système de projection comprenant un vitrage pour écran transparent.

Les écrans transparents sont de plus en plus utilisés, notamment dans le domaine aéronautique et dans le domaine automobile, pour l'affichage d'informations de toute nature. Ils sont constitués par un vitrage transparent sur lequel est projetée une image, ce qui permet à l'observateur à la fois de voir à travers le vitrage transparent et de voir l'image projetée sur le vitrage transparent faisant alors office d'écran.

Les écrans transparents basés sur un système de projection ont la propriété de réémettre une partie de la lumière projetée vers un volume dit d'observation pouvant contenir un ou plusieurs observateurs. Selon les technologies retenues, ce volume d'observation peut être plus ou moins large.

Dans le cas où le ou les observateurs ont une position fixe et unique, ce volume d'observation sera réduit au plus petit volume contenant les yeux du ou des observateurs afin de rendre maximale l'intensité de l'image projetée.

A l'inverse, quand le ou les observateurs peuvent se situer à de nombreuses positions, la lumière sera orientée dans tout le volume d'observation possible.

Plusieurs technologies permettent de rediriger la lumière dans le volume d'observation. On peut citer à titre d'exemple :
- la réflexion diffuse permise par application d'un miroir présentant une réflexion partielle, et de nature soit métallique, soit diélectrique par marche d'indice, soit composée d'un empilement de couches métalliques et diélectriques. Ce miroir est placé dans un plan texturé au sein d'un vitrage. La redirection de la lumière est alors régie par les lois de Snell-Descartes et par les facettes générées par la texturation de ce plan texturé.
- la réflexion par réseau de Bragg : il s'agit alors de solutions holographiques. La maîtrise de l'orientation des plans, de la période, de l'amplitude, de la variation d'indice et de l'épaisseur du réseau de Bragg permet une sélectivité en termes de longueurs d'ondes redirigées, de direction de redirection et de taux de redirection.

Les technologies à réflexion diffuse sont toutefois peu sélectives en longueur d'onde.

Ainsi, la transparence partielle du vitrage impose une transparence partielle à la projection. Une lumière parasite est ainsi émise à travers le vitrage. Cette lumière peut être gênante, par exemple pour des raisons de discrétion, d'éblouissement, d'esthétisme.

Les technologies holographiques peuvent permettre un excellent accord de longueur d'onde entre le projecteur et le réseau de Bragg. La transmission de la lumière du projecteur peut alors être bloquée tout en gardant une transmission lumineuse élevée pour une lumière naturelle. Cela rend néanmoins le système très peu robuste en termes de positionnement de projecteur et éventuellement en termes de température d'utilisation.

De même, une partie de la lumière projetée subit une réflexion spéculaire sur les surfaces du vitrage. Afin d'assurer une bonne clarté de la vision en transmission, il est indispensable que les deux surfaces du vitrage ne soient pas texturées. Les réflexions spéculaires sur le vitrage sont très intenses, ce qui peut engendrer un éblouissement pour les observateurs et/ou l'observation d'une image réfléchie non désirable.

En outre, dans le cas des technologies à réflexion diffuse à grand angle, toutes les sources lumineuses positionnées du côté observateur se retrouvent réfléchies et visibles par les observateurs. Ceci génère un voile, généralement blanc, dégradant à la fois la lisibilité de l'image projetée et la qualité de vision de l'environnement vu en transmission.

Le brevet américain US6449089B1 divulgue un système de projection sur écran transparent avec un projecteur et un écran transparent, l'observateur étant de l'autre côté de l'écran par rapport au projecteur. Pour les vitrages interposés entre l'extérieur et l'intérieur, un positionnement du système de projection à l'intérieur de l'habitacle est préférable afin de le protéger de l'environnement extérieur (températures extrêmes, pluie, poussières) ainsi que du vandalisme. Cela permet également de s'affranchir de la pluie sur les vitrages qui perturberait optiquement une projection issue de l'extérieur. Enfin, dans le cas particulier d'un véhicule, un projecteur positionné à l'extérieur pourrait également dégrader la performance aérodynamique du véhicule.

L'invention vise à surmonter les inconvénients de l'état antérieur de la technique en proposant un vitrage pour écran transparent et un système de projection associé rendant minimales les lumières parasites et permettant une souplesse dans le positionnement du projecteur.

La présente invention a donc pour objet un système de projection sur un écran transparent, caractérisé par le fait qu'il comprend :
- un vitrage comprenant un plan à réflexion diffuse et un premier filtre polarisant situé d'un côté du plan à réflexion diffuse, le premier filtre polarisant ayant une première direction de polarisation de telle sorte que le premier filtre polarisant transmet la lumière polarisée selon cette première direction de polarisation, ledit vitrage constituant l'écran transparent,
- au moins un projecteur configuré pour projeter un faisceau lumineux polarisé sur le vitrage, le projecteur étant situé du même côté de l'écran transparent qu'un observateur,
le premier filtre polarisant étant placé en aval du plan à réflexion diffuse, dans le sens de propagation de la lumière depuis l'au moins un projecteur et l'au moins un projecteur étant configuré pour émettre une lumière polarisée selon une direction orthogonale à la première direction de polarisation.

La présente invention a également pour objet un système de projection sur un écran transparent, caractérisé par le fait qu'il comprend :
- un vitrage comprenant un plan à réflexion diffuse et un premier filtre polarisant situé d'un côté du plan à réflexion diffuse, le premier filtre polarisant ayant une première direction de polarisation de telle sorte que le premier filtre polarisant transmet la lumière polarisée selon cette première direction de polarisation, ledit vitrage constituant l'écran transparent,
- au moins un projecteur configuré pour projeter un faisceau lumineux polarisé sur le vitrage, le projecteur étant situé du même côté de l'écran transparent qu'un observateur,
le premier filtre polarisant étant placé en amont du plan à réflexion diffuse, dans le sens de propagation de la lumière depuis l'au moins un projecteur et l'au moins un projecteur étant configuré pour émettre une lumière polarisée selon la première direction de polarisation.

Le projecteur peut être un projecteur intrinsèquement polarisé ou un projecteur non polarisé équipé d'un filtre polarisant.

Selon un mode de réalisation, l'au moins un projecteur est configuré pour projeter le faisceau lumineux sur le vitrage selon l'angle de Brewster et dont la polarisation de projection est choisie pour minimiser la réflexion spéculaire sur les faces externes du vitrage.

Selon un mode de réalisation, le vitrage comprend en outre un deuxième filtre polarisant situé de l'autre côté du plan à réflexion diffuse par rapport au premier filtre polarisant, le deuxième filtre polarisant ayant une deuxième direction de polarisation parallèle à la première direction de polarisation du premier filtre polarisant.

Selon un mode de réalisation, chaque filtre polarisant est l'un parmi un film plastique étiré dopé, de préférence un film d'alcool polyvinylique, PVA, dopé à l'iode, et un matériau transparent chargé de nanoparticules métalliques allongées et orientées.

Selon un mode de réalisation, le plan à réflexion diffuse est composé de particules diffusantes.

Selon un mode de réalisation, le plan à réflexion diffuse est une surface rugueuse recouverte d'au moins une couche semi-réfléchissante parmi les couches semi-réfléchissantes de type métallique, les couches semi-réfléchissantes de type diélectrique haut indice, et les couches semi-réfléchissantes de type interférentielle.

Les couches semi-réfléchissantes peuvent être séparées par des couches diélectriques de plus bas indices.

Selon un mode de réalisation, la surface rugueuse est l'une parmi la surface d'un verre du vitrage interne au vitrage et une surface d'une feuille intégrée dans le vitrage.

Selon un mode de réalisation, le vitrage est un vitrage feuilleté constitué d'au moins deux feuilles de verre et d'au moins une feuille de matériau intercalaire de type poly(butyral vinylique) (PVB), polyuréthane thermoplastique (TPU) ou éthylène-acétate de vinyle (EVA) permettant de lier les au moins deux feuilles de verre du vitrage entre elles. Le vitrage peut comporter d'autres couches sans s'écarter du cadre de la présente invention.

En croisant les polarisations de la source de lumière polarisée et du premier filtre polarisant, la transmission lumineuse peut être éteinte. Pour autant, le filtre polarisant laisse passer une bonne quantité de la lumière naturelle à travers le vitrage. Le caractère transparent du vitrage est donc maintenu.

Pour mieux illustrer l'objet de la présente invention, on va en décrire ci-après, à titre illustratif et non limitatif, deux modes de réalisation en référence aux dessins annexés.

Sur ces dessins :
[Fig. 1] est une vue schématique d'un système de projection comprenant un écran transparent selon un premier mode de réalisation de la présente invention ; et
[Fig. 2] est une vue schématique analogue à la Figure 1 d'un système de projection comprenant un écran transparent selon un deuxième mode de réalisation de la présente invention

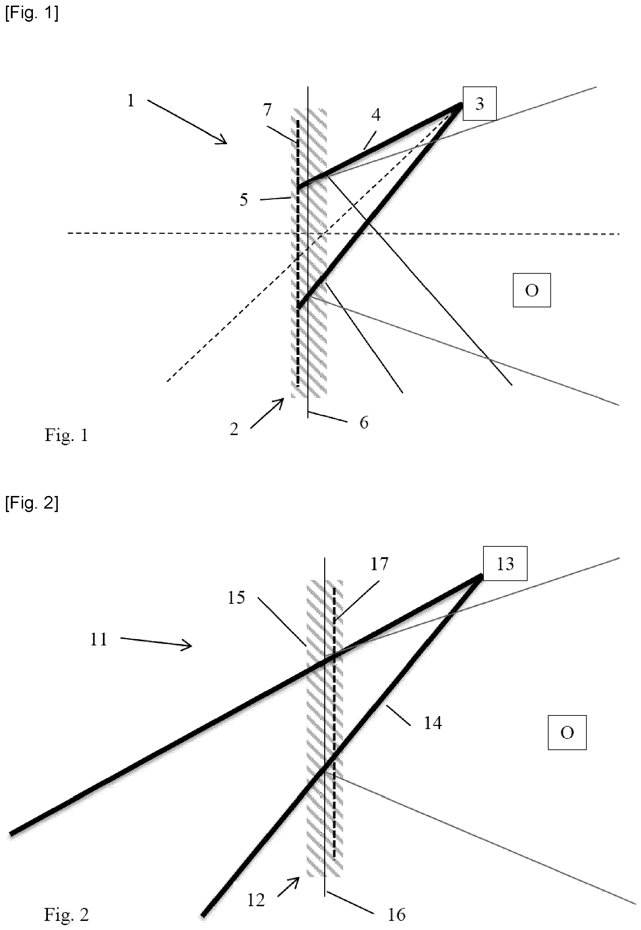

Si l'on se réfère à la Figure 1, on peut voir que l'on y a représenté un système de projection 1 selon un premier mode de réalisation de l'invention.

Le système de projection 1 comprend un écran transparent 2 sur lequel un projecteur 3 projette un faisceau lumineux polarisé 4. Un observateur O est placé du même côté de l'écran transparent 2 que le projecteur 3. L'observateur O est placé du côté d'utilisation normale de l'écran transparent 2.

L'écran transparent 2 comprend un vitrage 5 comportant plan à réflexion diffuse 6 et un filtre polarisant 7, situé dans ce premier mode de réalisation en aval du plan à réflexion diffuse 6 dans le sens de propagation de la lumière depuis le projecteur 3 de lumière polarisée.

Le filtre polarisant 7 est avantageusement l'un parmi un film plastique étiré dopé, de préférence un film d'alcool polyvinylique, PVA, dopé à l'iode, et un matériau transparent chargé de nanoparticules métalliques allongées et orientées.

Dans ce premier mode de réalisation, le filtre polarisant 7 est, par exemple, un filtre polarisant par absorption. Le filtre polarisant 7 transmet ainsi la lumière polarisée selon sa direction de polarisation, et réfléchit totalement la lumière ayant une direction de polarisation orthogonale à la direction de polarisation du filtre polarisant 7. La direction de polarisation du filtre polarisant 7 est orthogonale à la direction de polarisation de la lumière polarisée émise par le projecteur 3 de lumière polarisée.

Le plan à réflexion diffuse 6 peut être composé de particules diffusantes ou être constitué par une surface rugueuse recouverte d'au moins l'une parmi une couche semi-réfléchissante de type métallique, une couche semi-réfléchissante de type diélectrique haut indice, ou une couche semi-réfléchissante de type interférentielle, la surface rugueuse étant elle-même la surface d'un verre du vitrage ou une surface d'une feuille intégrée dans le vitrage.

Le vitrage 5 constituant l'écran transparent 2 est avantageusement un vitrage feuilleté constitué d'au moins deux feuilles de verre et d'au moins une feuille de matériau intercalaire de type PVB, TPU ou EVA permettant de lier les au moins deux feuilles de verre du vitrage entre elles.

Dans ce premier mode de réalisation, le filtre polarisant 7 atténue la transmission lumineuse du vitrage. Ceci renforce le contraste entre la scène projetée sur l'écran transparent 2 et celle vue au travers.

Egalement, la lumière polarisée sera avantageusement projetée sur l'écran transparent 2 par le projecteur 3 selon l'angle de Brewster pour, en plus de supprimer la transmission de la lumière polarisée issue de projecteur 3 après le filtre polarisant 7, atténuer très fortement la réflexion spéculaire.

Si l'on se réfère à la Figure 2, on peut voir que l'on y a représenté un système de projection 11 selon un deuxième mode de réalisation de la présente invention.

Le système de projection 11 comprend un écran transparent 12 sur lequel un projecteur 13 projette un faisceau lumineux polarisé 14. Un observateur O est placé du même côté de l'écran transparent 12 que le projecteur 13. L'observateur O est placé du côté d'utilisation normale de l'écran transparent 12.

L'écran transparent 12 est un vitrage 15 qui comporte un plan à réflexion diffuse 16 et un filtre polarisant 17, situé dans ce deuxième mode de réalisation en amont du plan à réflexion diffuse 16 dans le sens de propagation de la lumière depuis le projecteur 13 de lumière polarisée.

Dans ce deuxième mode de réalisation, le filtre polarisant 17 est un filtre absorbant ayant une direction de polarisation. Le filtre polarisant 17 transmet ainsi la lumière polarisée selon sa direction de polarisation, et absorbe totalement la lumière ayant une direction de polarisation orthogonale à la direction de polarisation du filtre polarisant 17. La direction de polarisation du filtre absorbant 17 correspond à la direction de polarisation de la lumière polarisée émise par le projecteur 13 de lumière polarisée.

Ce deuxième mode de réalisation est adapté à des applications à grand angle de vision, et favorise une texturation du plan de réflexion générant une grande amplitude angulaire de réflexion diffuse. Alors, outre la lumière du projecteur 13, toutes les sources lumineuses éclairant l'écran transparent 12 par la même face généreront une lumière réfléchie diffuse. En cas d'un niveau d'éclairement important de l'environnement des observateurs, un voile blanc peut en effet apparaître sur les écrans à réflexion diffuse.

En positionnant le filtre polarisant 17 dans le vitrage entre le projecteur 13 et le plan à réflexion diffuse 16, la direction de polarisation du filtre polarisant 17 étant orientée de façon à laisser passer la lumière polarisée du projecteur 13, l'intensité lumineuse de l'affichage n'est pas dégradée et :
- la transmission lumineuse est réduite, ce qui accroît le contraste en transmission,
- la réflexion des sources lumineuses parasites non polarisées est réduite de 50% et jusqu'à 100% en cas de polarisation croisée par rapport au projecteur 13.

Le filtre polarisant 17 et le plan à réflexion diffuse 16 de ce deuxième mode de réalisation peuvent avoir les mêmes caractéristiques que celles indiquées pour ces mêmes éléments dans la description du premier mode de réalisation ci-dessus.

Comme dans le premier mode de réalisation, le projecteur 13 projettera avantageusement la lumière polarisée sur l'écran transparent 12 pour fortement atténuer les réflexions spéculaires.

Selon un autre mode de réalisation non représenté, les deux modes de réalisation peuvent être combinés, avec un filtre polarisant de chaque côté du plan à réflexion diffuse, les deux filtres polarisants ayant des directions de polarisation parallèles, les deux filtres ayant une direction de polarisation parallèle à la direction de polarisation de la lumière polarisée issue du projecteur.

## Revendications

1. Système de projection (1) sur un écran transparent (2), **caractérisé par le fait qu'**il comprend :
- un vitrage (5) comprenant un plan à réflexion diffuse (6) et un premier filtre polarisant (7) situé d'un côté du plan à réflexion diffuse (6), le premier filtre polarisant (7) ayant une première direction de polarisation de telle sorte que le premier filtre polarisant (7) transmet la lumière polarisée selon cette première direction de polarisation, ledit vitrage (5) constituant l'écran transparent (2),
- au moins un projecteur (3) configuré pour projeter un faisceau lumineux polarisé sur le vitrage (5), le projecteur (3) étant situé du même côté de l'écran transparent (2) qu'un observateur (O),
le premier filtre polarisant (7) étant placé en aval du plan à réflexion diffuse (6), dans le sens de propagation de la lumière depuis l'au moins un projecteur (3) et l'au moins un projecteur (3) étant configuré pour émettre une lumière polarisée selon une direction orthogonale à la première direction de polarisation.

2. Système de projection (11) sur un écran transparent (12), **caractérisé par le fait qu'**il comprend :
- un vitrage (15) comprenant un plan à réflexion diffuse (16) et un premier filtre polarisant (17) situé d'un côté du plan à réflexion diffuse (16), le premier filtre polarisant (17) ayant une première direction de polarisation de telle sorte que le premier filtre polarisant (17) transmet la lumière polarisée selon cette première direction de polarisation, ledit vitrage (15) constituant l'écran transparent (12),
- au moins un projecteur (13) configuré pour projeter un faisceau lumineux polarisé sur le vitrage (15), le projecteur (13) étant situé du même côté de l'écran transparent (12) qu'un observateur (O),
le premier filtre polarisant (17) étant placé en amont du plan à réflexion diffuse (16), dans le sens de propagation de la lumière depuis l'au moins un projecteur (13) et l'au moins un projecteur (13) étant configuré pour émettre une lumière polarisée selon la première direction de polarisation.

3. Système de projection (1 ; 11) selon la revendication 1 ou la revendication 2, **caractérisé par le fait que** l'au moins un projecteur (3 ; 13) est configuré pour projeter le faisceau lumineux sur le vitrage (5 ; 15) selon l'angle de Brewster et dont la polarisation de projection est choisie pour minimiser la réflexion spéculaire sur les faces externes du vitrage (15).

4. Système de projection (1 ; 11) selon l'une des revendications 1 à 3, **caractérisé par le fait que** le vitrage (5 ; 15) comprend en outre un deuxième filtre polarisant (7 ; 17) situé de l'autre côté du plan à réflexion diffuse (6 ; 16) par rapport au premier filtre polarisant (7 ; 17), le deuxième filtre polarisant (7 ; 17) ayant une deuxième direction de polarisation parallèle à la première direction de polarisation du premier filtre polarisant (7 ; 17).

5. Système de projection (1 ; 11) selon l'une des revendications 1 à 4, **caractérisé par le fait que** chaque filtre polarisant (7 ; 17) est l'un parmi un film plastique étiré dopé, de préférence un film d'alcool polyvinylique, PVA, dopé à l'iode, et un matériau transparent chargé de nanoparticules métalliques allongées et orientées.

6. Système de projection (1 ; 11) selon l'une des revendications 1 à 5, **caractérisé par le fait que** le plan à réflexion diffuse (6 ; 16) est composé de particules diffusantes.

7. Système de projection (1 ; 11) selon l'une des revendications 1 à 6, **caractérisé par le fait que** le plan à réflexion (6 ; 16) diffuse est une surface rugueuse recouverte d'au moins une couche semi-réfléchissante parmi les couches semi-réfléchissantes de type métallique, les couches semi-réfléchissantes de type diélectrique haut indice, et les couches semi-réfléchissantes de type interférentielle.

8. Système de projection (1 ; 11) selon la revendication 8, **caractérisé par le fait que** la surface rugueuse est l'une parmi la surface d'un verre du vitrage (5 ; 15) interne au vitrage (5 ; 15) et une surface d'une feuille intégrée dans le vitrage (5 ; 15).

9. Système de projection (1 ; 11) selon l'une des revendications 1 à 8, **caractérisé par le fait que** le vitrage (5 ; 15) est un vitrage feuilleté constitué d'au moins deux feuilles de verre et d'au moins une feuille de matériau intercalaire de type PVB, TPU ou EVA permettant de lier les au moins deux feuilles de verre du vitrage entre elles.
